# EUROPÄISCHE PATENTSCHRIFT

(11) **EP 2 214 922 B1**
(45) Veröffentlichungstag und Bekanntmachung des Hinweises auf die Patenterteilung: **18.05.2011**
(21) Anmeldenummer: 08857615.2
(22) Anmeldetag: 03.12.2008
(51) Int. Cl.: B60H 1/00

(54) **HEIZ-/KÜHLSYSTEM MIT MEHREREN GETRENNTEN VERBRAUCHERKREISEN, INSBESONDERE FÜR NUTZFAHRZEUGE**
HEATING/COOLING SYSTEM HAVING A PLURALITY OF SEPARATE CONSUMER CIRCUITS, PARTICULARLY FOR COMMERCIAL VEHICLES
SYSTÈME DE CHAUFFAGE/REFROIDISSEMENT AVEC PLUSIEURS CIRCUITS CONSOMMATEURS SÉPARÉS, EN PARTICULIER POUR DES VÉHICULES UTILITAIRES

(30) Priorität: 04.12.2007 DE 202007016666 U
(43) Veröffentlichungstag der Anmeldung: 11.08.2010
(73) Patentinhaber: Bürkert Werke GmbH, 74653 Ingelfingen (DE)
(72) Erfinder: LOTHA, Hartmuth, 74635 Kupferzell (DE)
(74) Vertreter: Prinz & Partner
(86) Internationale Anmeldenummer: PCT/EP2008/010236
(87) Internationale Veröffentlichungsnummer: WO 2009/071280

(56) Entgegenhaltungen:
- EP-A- 1 354 734
- EP-A- 1 441 160
- DE-A1- 3 133 501
- DE-A1- 19 824 516
- DE-C1- 10 237 420

## Beschreibung

Die Erfindung betrifft ein Heiz-/Kühlsystem mit mehreren getrennten Verbraucherkreisen, insbesondere für Nutzfahrzeuge.

In solchen Systemen erfolgt die Verteilung des Wärmeträgermediums (z.B. Wasser oder ein Wasser/Glykol-Gemisch) in die verschiedenen Kreisläufe mit Ventilen, die in den verschiedenen versorgten Heiz- oder Kühlkreisen angeordnet sind. Das Wärmeträgermedium strömt dann in Wärmetauscher, in denen ein Wärmeaustausch stattfindet. In Heiz-/Kühlsystemen gemäß dem Stand der Technik gibt es keine Trennung der verschiedenen Bereiche, weder nach Temperatur noch nach Funktion. Insbesondere sind Sammler, die das Wärmeträgermedium nach Durchströmen der Wärmetauscher sammeln und in den Rücklauf leiten, häufig in nächster Nähe zu den Regelventilen im Vorlauf angeordnet. Beispielsweise offenbart die EP 1 441 160 B1 die Zusammenfassung von Sammler und Regelventilen im Vorlauf in einem Block. Damit ist im Falle eines Heizkreises das heiße Wärmeträgermedium in nächster Nähe zum abgekühlten Wärmeträgermedium.

Mögliche Nutzfahrzeuge, die ein Heiz-/Kühlsystem mit mehreren getrennten Verbraucherkreisen haben, sind beispielsweise Kühltransporter, die einen gekühlten Laderaum und vielleicht auch noch eine klimatisierte Fahrerkabine haben, aber auch Reisebusse. Moderne Reisebusse haben eine Vielzahl von Heiz- und Kühlkreisen für eine Deckenheizung, eine Bodenheizung, mit Heizkreisen für vorne im Bus, hinten im Bus, die alle getrennt angesteuert werden können, vorzugsweise zentral an einer Stelle. Bei Nutzfahrzeugen, beispielsweise den erwähnten Reisebussen, sind die Einbaumöglichkeiten für Rohrsysteme zum Transport eines Wärmeträgermediums sehr begrenzt. Wird durch das Heiz-/Kühlsystem vorgegeben, dass die zu den Wärmetauschern hinführenden Leitungen an der gleichen Stelle starten, an der die von den Wärmetauschern zurückführenden Leitungen enden, nämlich in einem gemeinsamen Ventilblock, so kommen auch die Leitungen, die Heißwasser transportieren, in nächster räumlicher Nähe zu liegen zu denen, worin das kalte, vom Wärmetauscher zurückfließende Wasser geführt ist, so dass unerwünschte Wechselwirkungen auftreten.

Auch bei nötigen Servicefällen ist es von Nachteil, dass die verschiedenen Funktionsbereiche wie beispielsweise Sammler oder Verteiler nicht voneinander getrennt sind. Die Unübersichtlichkeit im gesamten Verrohrungssystem solcher Systeme stellt im Reparaturfall ein erhöhtes Fehlerrisiko und sogar eine Gefahrenquelle dar. Die Anschlüsse für Rohre, die zu Wärmetauschern führen, sind im Stand der Technik im gleichen Block wie die Anschlüsse für Rohre, die von den Wärmetauschern kommen. In der engen Einbausituation in einem Fahrzeug sind etwaige Kennzeichnungen am Ventilblock nicht unbedingt leicht zu erkennen.

Außerdem bedingt der übliche unstrukturierte Aufbau lange Servicezeiten.

Deshalb wird mit der vorliegenden, in den beigefügten Ansprüchen angegebenen Erfindung ein Heiz-/Kühlsystem vorgeschlagen, in dem die Komponenten sowohl nach Temperaturbereichen als auch nach Funktionsbereichen sowie nach Fließrichtung voneinander getrennt sind.

Erfindungsgemäß sind die Regelventile für die einzelnen Heiz-/Kühlkreisläufe in einem Regelventilblock zusammengefasst und der Sammler und der Regelventilblock bilden jeweils eigenständige Einheiten, die voneinander räumlich getrennt angeordnet werden können. Der Regelventilblock wird darüber hinaus vom Sammler thermisch getrennt. Die räumliche Trennung führt auf natürliche Weise auch zu einer Leitungsführung ohne benachbarte Rohrleitungen, zwischen denen große Temperaturdifferenzen bestehen können. Es kommt nicht mehr zu einer unerwünschten Wechselwirkung zwischen dem warmen und dem kalten Wärmeträgermedium, was den Wirkungsgrad der Anlage steigert.

Die Funktionsbereiche sind unterteilt in die Stellgliedebene zur Steuerung, die Serviceebene mit Absperrmodulen als Verteiler, die Verbraucherebene mit Wärmetauschern und die Sammlerebene mit Rückschlagsventilmodulen, über die das Wärmeträgermedium zum Rücklauf (z.B. Wasser in den Motorraum des Fahrzeugs) zurückgeführt wird.

Optional kann heißes Wasser über einen Bypass direkt zum Motorraum zurückgeführt werden.

In einem weiteren Ausführungsbeispiel ist in den Ventilblock zusätzlich eine Pumpe integriert, die für das Wasser im Heiz-/ Kühlkreislauf den notwendigen Druck zur Verfügung stellt.

Weitere Besonderheiten und Vorteile werden deutlich aus der Beschreibung bevorzugter Ausführungsformen, die sich auf die beigefügten Figuren stützt, in denen
- Figur 1 den Aufbau einer ersten Ausführungsform des gesamten Heiz-/ Kühlsystems darstellt, und
- Figur 2 den Aufbau einer zweiten Ausführungsform des gesamten Heiz-/Kühlsystems darstellt.

Zur vereinfachten Beschreibung wird im weiteren immer von einem Heizsystem ausgegangen, ein Kühlsystem ist hierzu analog aufgebaut.

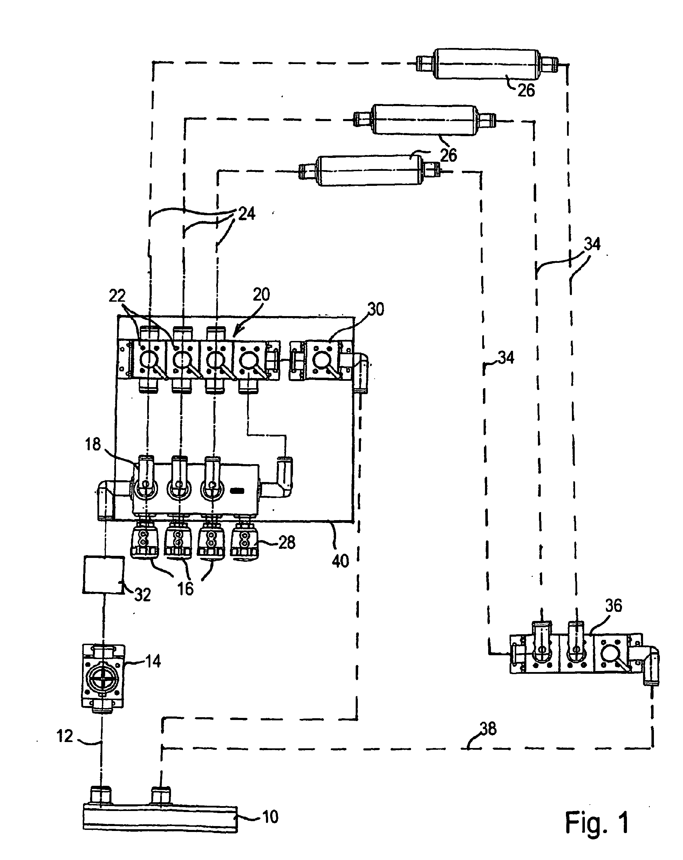

In Figur 1 ist ein Heizsystem beispielsweise für einen Bus schematisch dargestellt. Erwärmtes Wasser gelangt von einem Motor 10 über einen Vorlauf 12 zu einem Filtermodul 14. Die Verwendung des Filtermoduls 14 ist vorteilhaft, weil damit eventuell eingeschleppte Schmutzpartikel aus dem Kreislauf entfernt werden, um so eine einwandfreie Funktion der nachfolgenden Ventile zu garantieren.

Regelventile 16 für verschiedene Verbraucherkreise, d.h. verschiedene Heizkreisläufe sind in einem Regelventilblock 18 zusammengefasst. Gefiltertes Wasser oder allgemeiner gefiltertes Wärmeträgermedium wird mittels des Regelventilblocks 18 zu einem Verteiler 20 geleitet. Der Verteiler 20 ist aus mehreren Absperrmodulen 22 zusammengesetzt und bildet einen Absperrmodulblock 20. Die Absperrmodule sind jeweils durch ein Schott voneinander separiert.

Von dem Absperrmodulblock 20 führen Rohrleitungen 24 zu Wärmetauschern 26. Die Rohrleitungen 24 sind gestrichelt dargestellt. Damit soll angedeutet werden, dass sie unterschiedliche Längen haben können und vollkommen voneinander getrennt geführt sein können.

Mittels der Absperrmodule 22 des Verteilers 20 sind die Wärmetauscher 26 einzeln abschaltbar. Mittels der Regelventile 16 des Regelventilblocks 18 ist die Menge des in jedem Heizkreis zirkulierenden Wärmeträgermediums beeinflussbar.

Damit befindet sich in dem Regelventilblock 18 zur Temperaturregelung in den verschiedenen Bereichen wie Fahrerraumheizung oder Dachheizung jeweils ein Regelventil zur Beschickung jeweils eines Wärmetauschers 26. Ein weiteres Regelventil 28 im Regelventilblock 18 dient einer Bypass-Steuerung. Der Bypass führt vom Regelventilblock 18 über ein Absperrmodul 30 des Verteilers 20 direkt zum Motor 10 zurück. In Figur 1 ist nach dem Filtermodul 14 schematisch eine Zirkulationspumpe 32 angedeutet, die den Transport des Wärmeträgermediums sicherstellt. Vorteilhafterweise ist diese in den Regelventilblock 18 integriert, sie kann aber natürlich auch in den Rücklauf eingefügt werden.

Das Wasser gelangt über Rohrleitungen 24 zum jeweiligen Wärmetauscher 26 des gewünschten zu temperierenden Bereichs und fließt dann abgekühlt über Rohrleitungen 34 zu einem Sammler 36 und von dort über einen Rücklauf 38 zurück zum Motorraum mit dem Motor 10. Auch die Rohrleitungen 34 sind gestrichelt dargestellt, sie können unterschiedliche Längen und eine unterschiedliche Wegführung haben.

Im Sammler 36 sind Rückschlagventile integriert, die verhindern, dass Wasser aus dem niedrigeren Temperaturbereich zu den Wärmetauschern 26 zurückfließen kann.

Mit dem Regelventilblock 18, dem Absperrmodulblock 20 und dem Sammler 36 sind eigenständige Komponenten vorgesehen, die räumlich voneinander getrennt angeordnet werden können. In der Ausführungsform gemäß Figur 1 sind Regelventilblock 18 und Absperrmodulblock 20, die beide warmes Wasser führen, benachbart angeordnet und mit einer schematisch dargestellten Isolierung 40 thermisch vom Sammler 36 getrennt. Die thermische Isolierung kann durch eine Ummantelung oder Kapselung erreicht werden, aber auch durch eine geeignete Wahl des Einbauortes, d.h. in Form einer ausreichenden räumlichen Entfernung zum Sammler 36. Die Zusammenfassung von Regelventilblock 18 und Absperrmodulblock 20 hat den Vorteil, dass beide Blöcke, die einen steuernden Eingriff in das Heiz-/Kühlsystem erlauben, für den Fahrer günstig erreichbar beieinander angeordnet werden können.

Werden beispielsweise der Regelventilblock 18 und der Absperrmodulblock 20 auf der linken Seite des Busses eingebaut und der Sammler 36 auf der rechten Seite des Busses, so können die warmes Wasser führenden Rohrleitungen 24 zunächst linksseitig und dann zu den jeweiligen Wärmetauschern geführt werden, und die von den Wärmetauschern abgehenden, kaltes Wasser führenden Rohrleitungen 34 werden zunächst zur rechten Busseite geführt und dort dann zum Sammler 36. Damit wird zum einen vermieden, dass über längere Strecken Rohrleitungen 24 und Rohrleitungen 34 nebeneinander liegen und ein Wärmeaustausch stattfindet, und zum anderen sinkt die Wahrscheinlichkeit deutlich, dass Rohre 24 mit Rohren 34 im Servicefall miteinander verwechselt werden. Natürlich sind andere getrennte Einbauorte (oben - unten, vorne - hinten) denkbar, die von den Gegebenheiten im Nutzfahrzeug abhängen.

Die Erfindung ist im übrigen nicht auf eine Benutzung in Nutzfahrzeugen beschränkt, auch in anderen Heiz- und Kühlsystemen erlaubt die Trennung in Funktionsblöcke eine besonders übersichtliche Installation.

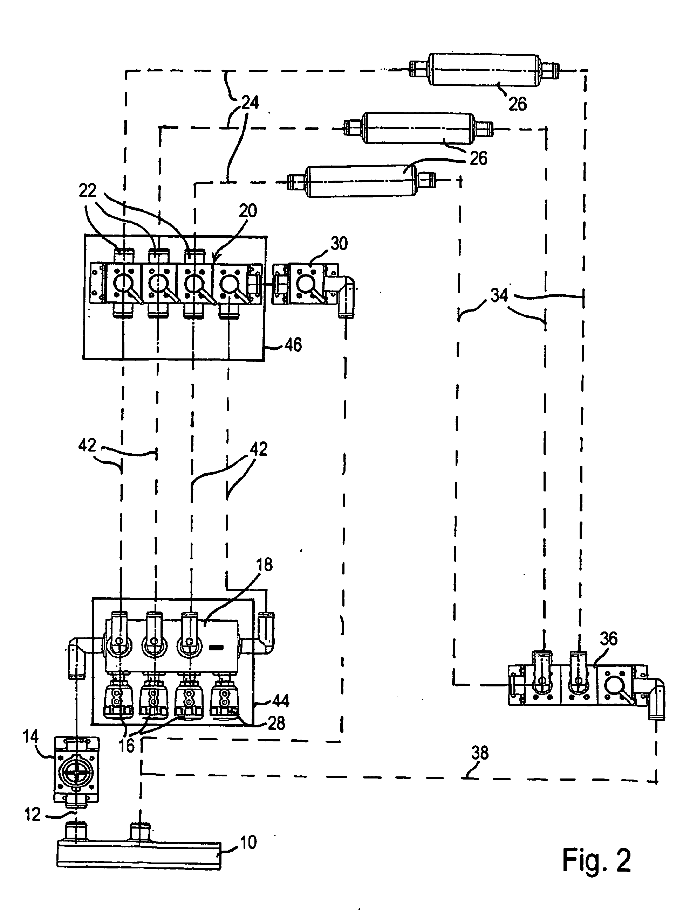

Figur 2 zeigt im wesentlichen das gleiche Heizsystem wie Figur 1, gleiche Komponenten sind mit den gleichen Bezugszeichen gekennzeichnet und werden nicht noch einmal erläutert. Im Gegensatz zu Figur 1 sind hier auch der Regelventilblock 18 und der Absperrmodulblock 20 deutlich voneinander getrennt und durch Rohrleitungen 42 miteinander verbunden. Für eine thermische Trennung vom Sammler 36 sind getrennte Kapselungen 44 und 46 angedeutet. Im in Figur 2 dargestellten Ausführungsbeispiel ist Absperrmodul 30, das dem Bypass-Kreis zugeordnet ist, nicht Teil des Absperrmodulblocks 20 und nicht von der thermischen Kapselung erfasst. Durch die weitergehende Aufteilung in Funktionsblöcke ist das Heizsystem gemäß Figur 2 noch flexibler im Einbau, wobei die thermische Trennung zwischen den warmes Wasser führenden Teilen und den kaltes Wasser führenden Teilen erhalten bleibt.

## Patentansprüche

1. Heiz-/Kühlsystem, insbesondere für Fahrzeuge, mit mehreren getrennten Heiz-/Kühlkreisen, in denen ein Wärmeträgermedium zirkulieren kann, umfassend
einen Vorlauf (12),
je ein Regelventil (16) für jeden Heiz-/Kühlkreis, mit dem die Menge des in dem Heiz-/Kühlkreis zirkulierenden Wärmeträgermediums beeinflusst werden kann,
je einen Wärmetauscher (26) für jeden Heiz-/Kühlkreis,
einen Sammler (36), in dem das von den Wärmetauschern zurückfließende Wärmeträgermedium gesammelt werden kann, und
einen Rücklauf (38), **dadurch gekennzeichnet, dass**
die Regelventile (16) in einem Regelventilblock (18) zusammengefasst sind, der Sammler (36) und der Regelventilblock (18) jeweils eine eigenständige Einheit bilden, die räumlich getrennt von der anderen Einheit angeordnet werden kann, und dass der Regelventilblock (18) thermisch vom Sammler (36) getrennt ist.

2. Heiz-/Kühlsystem nach Anspruch 1, wobei die thermische Trennung durch eine räumliche Trennung und / oder eine Isolierung (40; 44,46) des Regelventilblocks (18) in Form einer Ummantelung oder Kapselung erreicht wird.

3. Heiz-/Kühlsystem nach Anspruch 1 oder 2, das ferner umfasst ein Absperrmodul (22) für jeden Heiz-/Kühlkreis, wobei die Absperrmodule (22) in einem Absperrmodulblock (20) zusammengefasst sind und als eigenständige Einheit räumlich getrennt zwischen dem Regelventilblock (18) und den Wärmetauschern (26) angeordnet werden können.

4. Heiz-/Kühlsystem nach Anspruch 3, wobei der Absperrmodulblock (20) thermisch vom Sammler (36) getrennt ist.

5. Heiz-/Kühlsystem nach einem der vorangegangenen Ansprüche, wobei im Vorlauf (12) ein Filter (14) räumlich getrennt von dem Regelventilblock (18) angeordnet ist.

6. Heiz-/Kühlsystem nach einem der vorangegangenen Ansprüche, wobei der Regelventilblock (18) ein Bypass-Regelventil (28) aufweist, dessen Ausgang mit einem Eingang eines Bypass-Absperrmoduls (30) des Absperrmodulblocks verbunden ist, dessen Ausgang direkt mit dem Rücklauf (38) verbunden ist.

7. Heiz-/Kühlsystem nach einem der vorangegangenen Ansprüche, wobei der Transport des Wärmeträgermediums durch eine Zirkulationspumpe (32) erfolgt.

8. Heiz-/Kühlsystem nach Anspruch 7, wobei die Zirkulationspumpe (32) in den Regelventilblock (18) integriert ist.

## Claims

1. A heating/cooling system, in particular for vehicles, having a plurality of separate heating/cooling circuits in which a heat transfer medium can circulate, comprising
a supply line (12);
one control valve (16) for each heating/cooling circuit, which can be used for controlling the amount of heat transfer medium circulating in the heating/cooling circuit;
one heat exchanger (26) for each heating/cooling circuit;
a collector (36) in which the heat transfer medium flowing back from the heat exchangers can be collected; and
a return line (38), **characterized in that**
the control valves (16) are combined in a control valve block (18), the collector (36) and the control valve block (18) each constitute an independent unit which can be arranged spatially separated from the other unit, and **in that** the control valve block (18) is thermally separated from the collector (36).

2. The heating/cooling system according to claim 1, wherein the thermal separation is obtained by a spatial separation and/or an insulation (40; 44, 46) of the control valve block (18) in the form of a sheathing or encapsulation.

3. The heating/cooling system according to claim 1 or 2, further comprising a shut-off module (22) for each heating/cooling circuit, wherein the shut-off modules (22) are combined in a shut-off module block (20) and can be arranged spatially separately as an independent unit between the control valve block (18) and the heat exchangers (26).

4. The heating/cooling system according to claim 3, wherein the shut-off module block (20) is thermally separated from the collector (36).

5. The heating/cooling system according to any of the preceding claims, wherein a filter (14) is arranged in the supply line (12) so as to be spatially separated from the control valve block (18).

6. The heating/cooling system according to any of the preceding claims, wherein the control valve block (18) includes a bypass control valve (28) having an outlet connected to an inlet of a bypass shut-off module (30) of the shut-off module block having an outlet directly connected with the return line (38).

7. The heating/cooling system according to any of the preceding claims, wherein the heat transfer medium is circulated by means of a circulation pump (32).

8. The heating/cooling system according to claim 7, wherein the circulation pump (32) is integrated in the control valve block (18).

## Revendications

1. Système de chauffage/refroidissement, en particulier pour véhicules comportant plusieurs circuits de chauffage/refroidissement séparés, dans lesquels peut circuler un fluide caloporteur, comprenant
une canalisation montante (12),
une vanne de régulation (16) respective pour chaque circuit de chauffage/refroidissement, par laquelle la quantité de fluide caloporteur circulant dans le circuit de chauffage/refroidissement peut être influencée,
un échangeur de chaleur respectif (26) pour chaque circuit de chauffage/refroidissement,
un collecteur (36) dans lequel le fluide caloporteur refluant depuis les échangeurs de chaleur peut être collecté, et
une canalisation de retour (38), **caractérisé en ce que**
les vannes de régulation (16) sont réunies dans un bloc de vannes de régulation (18), le collecteur (36) et le bloc de vannes de régulation (18) forment chacun une unité autonome qui peut être agencée séparément dans l'espace par rapport à l'autre unité, et **en ce que** le bloc de vannes de régulation (18) est thermiquement séparé du collecteur (36).

2. Système de chauffage/refroidissement selon la revendication 1, dans lequel la séparation thermique est atteinte par une séparation dans l'espace et/ou une isolation (40; 44, 46) du bloc de vannes de régulation (18) sous la forme d'une enveloppe ou d'un blindage.

3. Système de chauffage/refroidissement selon la revendication 1 ou 2, qui comprend en outre
un module d'arrêt (22) pour chaque circuit de chauffage/refroidissement, les modules d'arrêt (22) étant réunis dans un bloc de modules d'arrêt (20) et peuvent être agencés en tant qu'unité autonome séparément dans l'espace entre le bloc de vannes de régulation (18) et les échangeurs de chaleur (26).

4. Système de chauffage/refroidissement selon la revendication 3, dans lequel le bloc de modules d'arrêt (20) est thermiquement séparé du collecteur (36).

5. Système de chauffage/refroidissement selon l'une quelconque des revendications précédentes, dans lequel un filtre (14) est agencé dans la canalisation montante (12) séparément dans l'espace par rapport au bloc de vannes de régulation (18).

6. Système de chauffage/refroidissement selon l'une quelconque des revendications précédentes, dans lequel le bloc de vannes de régulation (18) présente une vanne de régulation de dérivation (28) dont la sortie est reliée à l'entrée d'un module d'arrêt de dérivation (30) du bloc de modules d'arrêt, dont la sortie est directement reliée à la canalisation de retour (38).

7. Système de chauffage/refroidissement selon l'une quelconque des revendications précédentes, dans lequel le transport du fluide caloporteur a lieu par une pompe de circulation (32).

8. Système de chauffage/refroidissement selon la revendication 7, dans lequel la pompe de circulation (32) est intégrée dans le bloc de vannes de régulation (18).
